# EUROPEAN PATENT SPECIFICATION

(11) **EP 3 405 019 B1**
(45) Date of publication and mention of the grant of the patent: **05.03.2025**
(21) Application number: 17705316.2
(22) Date of filing: 20.01.2017
(51) Int. Cl.: B65D 85/52, A01G 9/029, A01G 18/64, A01G 22/15, A01G 22/40, A01G 24/44, A01G 27/06

(54) **IMPROVED METHOD FOR PRODUCING CONSUMER-READY VEGETABLES, MUSHROOMS OR HERBS IN A BOX**
VERBESSERTES VERFAHREN ZUR HERSTELLUNG VON ESSFERTIGEM GEMÜSE, PILZEN ODER KRÄUTERN IN EINER KISTE
MÉTHODE AMELIORÉE DE PRODUCTION DE LÉGUMES, CHAMPIGNON OU HERBES PRÊT À LA CONSOMMATION DANS UNE BOITE

(30) Priority: 21.01.2016 NL 2016129
(43) Date of publication of application: 28.11.2018
(73) Proprietor: Rijk Zwaan Zaadteelt en Zaadhandel B.V., 2678 KX De Lier (NL)
(72) Inventor: VOERMANS, Wilhelmus Petrus Adrianus Roeland, 2678 KX De Lier (NL); VAN DER LAKEN, Jeanette Diana, 2678 KX De Lier (NL)
(74) Representative: van Someren, Petronella F. H. M.
(86) International application number: PCT/EP2017/051249
(87) International publication number: WO 2017/125588

(56) References cited:
- WO-A1-00/01220
- WO-A1-2013/154424
- WO-A1-2015/117685
- WO-A2-99/40031
- FR-A7- 2 290 823
- US-A- 4 903 432

## Description

The present invention relates to an improved method for producing consumer-ready vegetables, mushrooms or herbs. The invention also relates to a set that comprises the constituents for performing the method and a container comprising the vegetable, mushrooms or herbs in any developmental stage.

Vegetables, mushrooms and herbs are traditionally produced by specialized growers in greenhouses or on fields. After harvest, the produce needs to be transported to a retail outlet. The transportation costs have an impact on the final consumer price. Moreover, it is sometimes necessary to store the produce before it is distributed. For certain products this may require specialized storage facilities.

In WO-A-2013154424 a holder is described for one plant, comprising a semi-permeable filter on or over the entrance, which semi-permeable filter has a vapour permeation capacity related to a type of the plant and the content of the reservoir. Also, WO-A-2015117685 describes a holder with semi-permeable foil defining a non-planar boundary of an interior space and an exterior space, which semi-permeable foil has permeation of water vapor.

Another type of plant holder is described in US-A-4903432. It describes a sterile system that is sealable and autoclavable, unbreakable, and reusable to provide sterile growing conditions. FR 2 290 823 A7, WO 00/01220 A1 and WO 99/40031 A2 illustrate alternative water tanks.

WO2014/056869 discloses a new way of producing vegetables, herbs and mushrooms that leads to lower costs and a fresher product by way of a method for producing consumer-ready vegetables, mushrooms or herbs, comprising the steps of:
a) culturing vegetables, mushrooms or herbs in a closed container under suitable growing conditions until maturity; and
b) transferring the container with the mature vegetable, mushrooms or herb to a retail outlet.

It was now found that in this system the humidity in the closed container may become too high which could adversely affect the plant growth. Furthermore, there is a high risk of contamination of the growth medium by pathogens, especially when the growth medium comprises nutrients which promote bacterial growth.

It is the object of the present invention to provide an improved method in which one or both of these problems are solved.

In the research leading to the invention it was found that when the plants are kept separated from the water and nutrients, contamination of the plants is avoided.

The invention thus relates to a method for producing consumer-ready vegetables, mushrooms or herbs according to claim 1.

The means for allowing water and nutrients to enter the plant compartment while avoiding that contaminations and pathogens enter the inner compartment are suitably formed by a filter. The filter is suitably integrated in the side of the container that is in contact with the water, usually the bottom.

The two compartments are separated from each other but are in liquid contact via the filter thus allowing the water compartment to provide water to the plant compartment for the growth of the plants, mushrooms or herbs. In particular embodiments, that will be described further below, one of the compartments is located within the other compartment.

In this respect, a filter can be made of any material that is permeable to water and nutrients but does obstruct the passing of bacteria, molds, yeast or any other micro-organism that could affect the growth of the vegetable, herb or mushroom present in the compartment. Such filters and filtration methods to sterilize liquids are known in the art. Several materials are known and used for the filtration include nylon, polycarbonate, cellulose acetate, polyvinylidene fluoride (PVDF), and polyethersulfone (PES). There are three important aspects in which these filter material might differ such as protein retention, flow rate and the presence of leachable materials. Another important aspect is the pore size that is applied in a filter. The pore size also relates to the type of micro-organism that should be kept out. For bacteria well known pore sizes are 0.22 and 0.45 µm.

In a preferred embodiment the plant compartment of the container further comprises means for transporting water and nutrients entering the plant compartment to the vegetables, mushrooms and herbs. The means are suitably capillary means that distribute water and nutrients through the plant compartment to reach the seed or the roots of the growing plant. Such means are preferably formed by a carrier, in particular a mat. The mat may already comprise the seeds or the seeds are placed on or in the mat. The structure of the mat is suitable for transport and distribution of water and nutrients entering via the filter through the plant compartment via capillary action. The terms 'mat', 'seed mat' and 'capillary mat' are used interchangeably herein.

In this respect, a seed mat (also referred to as a seed cloth) is formed of any material that is suitable for growing plants from the seeds that are comprised in the seed mat. Known materials that are used for such seed mats are fabric or paper or a combination thereof.

By avoiding direct contact between the water compartment and the plant compartment that initially comprises the seed and after germination comprises the plant, contamination of the seeds and plants with pathogens is avoided. One can make certain that the water with nutrients is pathogen-free before introducing it into the water compartment to avoid contamination but this is not necessary. Moreover, even if the water becomes contaminated the filter will keep the pathogens away from the plants.

The container is furthermore provided with a semipermeable foil for closing off the two compartments. This foil allows the exchange of gases and (water) vapor but keeps out pathogens and contaminants that may be present in the environment.

In one embodiment, the water and nutrients are comprised in the space defined by the plant compartment and the water compartment, i.e. between the bottom of the plant compartment that comprises the filter and the bottom of the water compartment, which is in this embodiment also the actual bottom of the container as a whole. It is of course also possible to culture the plants upside down and the bottom of the water container is then the top of the container as a whole but this is usually not preferred.

The roots of the plants take up water and nutrients through the transportation means, in particular the mat, that distributes the water and nutrients and provides it to the roots. The roots of the vegetables, mushrooms or herbs can thus grow on top of the mat, but also in the mat and through the mat.

In a further embodiment, the water compartment is formed by a bag comprising water and nutrients. The bag replaces the space defined by the bottoms of the plant and water compartments. The mat is suitably located on top of the bag and vegetables, mushrooms or herbs grow in or on the mat. In this embodiment the filter is located in the side of the bag that is in use in contact with the mat. This will usually be the upper side of the bag if the bag is located on the bottom of the plant compartment.

In another embodiment, the water compartment is made from a rigid material for proper handling. The plant compartment is suitably present in the form of a bag. The material used for such a bag is preferably not permeable for any compound. Said plant compartment in the form of a bag comprises a seed mat and a filter. The filter is in contact with both the water compartment and the seed mat, thereby providing water and nutrients to the germinating seeds, mycelium or spores and/or growing vegetables, mushrooms or herbs.

The seeds are preferably sterile and integrated in the mat to avoid floating away. Alternatively, the seeds are fixed to the mat by means of an adhesive or a glue. The water and nutrients are suitably formed by standard hydroponics water. However, more specific recipes can be applied in order to optimally facilitate the growth of the vegetables, mushrooms or herbs, using the method of the invention.

Culturing of the vegetables, mushrooms or herbs until maturity takes suitably place in, or in the vicinity of, the retail outlet. Suitably the products are cultured in storage rooms or basements of the retail outlet. This way the transportation costs are saved. Moreover, the products need not be stored between harvest and transport to their point of sale and are therefore more fresh. The retail outlet is suitably a supermarket, but other types of stores can be envisaged as well.

It is not necessary for the method of the invention to be performed in the retail outlet itself. It is also possible that the products are grown in regional facilities to supply multiple retail outlets in the area, thus still having part of the benefit of lower transportation costs.

The growth facilities are preferably provided with specialized lighting systems designed to provide the correct light intensity and colour, in particular, well known assimilation lighting. Such systems may be automatically controlled to allow for a light and darkness cycle that is particularly adapted to the type of vegetable, mushroom or herb. Further, temperature as well humidity levels are preferably regulated carefully. Also the level of flow of air throughout the system is very relevant as well as the quality of the air that is applied. The air is preferably filtered in order to minimize the possibility of an infection.

Prior to culturing the vegetables, mushrooms or herbs, seed for the vegetable or herb or spores for the mushrooms is placed on the bottom of the plant compartment or on the bag, in particular on or in a capillary mat that is placed on the bottom of the plant compartment or on the bag that forms the water compartment. The two compartments form the container, which is then closed off. Alternatively, a germinated seed, seedling or plantlet of the vegetable or herb or mycelium for the mushrooms is used instead of seeds or spores.

In order to germinate, the seeds or spores need to be in contact with a fluid, such as water or a buffer. Suitably, closing the container is done after introducing the fluid into the water compartment of the container. Since the container remains unopened before the product is ready to be consumed, all nutrients and fluids needed to obtain a mature product are to be included in the container before closure thereof.

Suitably, the container is closed with a permeable membrane. The membrane is permeable to for example oxygen (O₂),carbon dioxide (CO₂) and water vapor but preferably impermeable to contaminations and pathogens, like viruses, bacteria, fungi, protists or insects. The products thus grow in a contamination- and pathogen-free environment. The resistance requirements for the products are much lower or even dispensable when compared to growing products in a greenhouse or on the field. Each plant or mushrooms is individually packed and cannot contaminate other plants or be contaminated. The retailer can thus use seeds that comprise fewer resistances which as a consequence of the lower development costs is more cost-effective.

After sowing the seeds or spores, or planting the germinated seeds, seedlings, plantlets or mycelium, the container is closed with the membrane to be re-opened only by the consumer after the product is sold. Thus, the product itself does not require handling and remains much more hygienic.

In an embodiment, the seed mat is brought in contact with the water inside the growing container. By this action and through the capillary feature of the mat, germination of the seeds is triggered and seedlings will develop from the germinated seeds.

The method of the invention is particularly suitable for leafy vegetables, in particular, lettuce, endive, rucola, corn salad, chard, leaf beet, spinach, radish. The vegetables can also be sprout vegetables, such as cress, beet sprouts, alfalfa, broccoli sprouts, bean sprouts, fennel sprouts, cabbage sprouts, garlic sprouts, leek sprouts, pea sprouts, chickpea sprouts, radish sprouts.

The lettuce is for example, leaf lettuce, head lettuce or baby leaf lettuce. For baby leaf lettuce, different lettuce varieties can be used to obtain an attractive mixture. In one embodiment, two or more lettuce seeds of different varieties are used to obtain a mix of different leaf or head lettuce plants.

It will take about 4 to 5 weeks for leafy vegetables such as lettuce to grow to maturity. Since the lettuce is not harvested but sold in the container the shelf-life can be as long as 4 weeks. Preferably, the lettuce is consumed within three weeks from sale. The shelf-life of products grown by the method of the invention is influenced by multiple factors of which two are explicitly mentioned here. The temperature at which the mature product is stored is of relevance. Preferably, the container comprising the mature product is stored at a temperature between 0 and 10 degrees Celsius. More preferable, said container is stored at a temperature between 2 and 6 degrees Celsius. Another aspect which is of relevance is the presence of the semi-permeable foil on the container. In order to better regulate the moisture levels of the container comprising the mature product, the semi-permeable foil is preferably covered with a lid or a foil that is less permeable for gas exchange. However, to a certain extent gas exchange should still be possible if the original semi-permeable foil is covered.

The herbs are for example selected from chives, parsley, basil, dill, coriander, cilantro, mint, oregano, rosemary, thyme, marjoram, lemon balm, tarragon, sage. In a particular embodiment, mixtures of herbs can be produced such as an Italian herb mix or French herb mix.

Mixtures of mushrooms can also be made by using different spores. The method can also be used for obtaining one or a few large mushroom, such as a Portobello mushroom.

In a particular embodiment, the seeds can be provided in the form of a seed carrier, such as a seed mat, seed band or any other form. This is especially practical for mixtures of vegetables or herbs so that the correct seed distance is automatically obtained upon placing the seed carrier in the compartment.

The container suitably comprises nutrients for the vegetables, mushrooms or herbs. For each type of product a suitable amount of nutrients can be added to the water.

The container is preferably provided with a label with information regarding the vegetable, mushrooms or herb. The information comprises for example, the name of the vegetable, nutritional fact, best before date and the price. In addition to such sales information, other information, such as recipes, can be included as well. The container may also be provided with a paper wrap that contains such information.

The label or wrap can be applied prior to or immediately after closing the container. Preferably, the label or wrap is applied directly before transfer to the retail outlet. When applying the label or wrap, care should be taken that the upper side of the container is not so covered that entrance of light into the container is hampered.

The invention further relates to a set for producing consumer-ready vegetables, mushrooms or herbs according to claim 11 or claim 13.

In a further embodiment, the water compartment is a bag provided with a filter and comprising the water and nutrients, which bag is comprised inside the container and the vegetables, mushrooms or herbs grow in or on top of the bag, in particular in or on a capillary mat that is located on top of the bag. The filter allowing the water and nutrients contained in the bag to enter the mat is in contact with the mat and thus suitably located in the upper part of the bag. The advantage of using a pre-prepared bag is that the water with the nutrients can be produced and filled in the bag in a pathogen-free environment and requires no further handling that may involve contamination. The bag is suitably placed in a container. Suitably, the top of the container comprising the water compartment in the form of a bag is closed off with a semi-permeable foil as described herein.

In another embodiment, the water compartment is made from a rigid material for proper handling. The plant compartment is present in the form of a bag. The material used for such a bag should not be permeable for any compound and is made from a suitable film or foil. Said plant compartment in the form of a bag comprises a seed mat and a filter. The filter is in contact with both the water compartment and the seed mat. The mat through its capillary capacity, provides water and nutrients to the developing seeds, mycelium or spores and/or growing vegetables, mushrooms or herbs. On the top side, the plant compartment is open or contains perforations through which the vegetables, mushrooms or herbs are able to develop and grow.

Both with respect to the method and the set, the size and form of the container preferably correspond with the size and form of the mature vegetable, or herb or the quantity of mushrooms to be produced. The container can also have any other form as well.

Suitably, the closing membrane is at least partially self-adhesive, in particular at the edges. Alternatively, the closing membrane is sealed to the container by means of a heat sealer. The membrane can then be easily stuck to the open side of the container to seal it off.

In one embodiment of the set, the seeds are already placed in the container, and the container is already closed with the membrane. In this embodiment no moisture should be present in the container because that might lead to premature germination. In order to introduce the fluid, the container is then provided with means to allow the fluid to enter the space between the plant compartment and the water compartment of the container. Such means are for example, valve means that avoid entrance of contaminants and pathogens.

The invention further relates to a container comprising a vegetable, mushrooms or herb, obtainable by the method as claimed. The container is suitably adapted to the form of the product. It can be a square box, a rectangular box or a tube, or any other form. In a particular embodiment, the container has a double bottom defining a space in between them to receive the water and nutrients needed for the plant to grow to maturity. In one embodiment, the double bottom is obtained by using two boxes, one of which is placed into the other and leaves a space between the bottom of the inner box and the bottom of the outer box. The inner box is then the plant compartment and the outer box is the water compartment.

The invention can be performed without the contribution of a grower. The retailer can buy his seed or the seed mat directly from seed companies. Since one step in the vegetable supply chain is now no longer necessary, the retailer can produce his own vegetables, mushrooms and herbs at a significantly lower cost.

The present invention will further be illustrated in the figures that follow. In the figures, like reference numerals refer to the same or corresponding parts.
Figure 1 shows an exploded view of one embodiment of the container of the invention.
Figure 2A shows a side view of the separate elements of the container.
Figure 2B shows the container of figure 2A in use at the beginning of the growing process.
Figure 2C shows the container of figure 2A with growing baby leaf plants.
Figure 2D shows the container of figure 2A with mature lettuce heads.
Figure 3 shows the consumer-ready containers.
Figure 4 shows a second embodiment of the invention in the initial stage.
Figure 5 shows the embodiment of figure 4 in the consumer-ready stage.

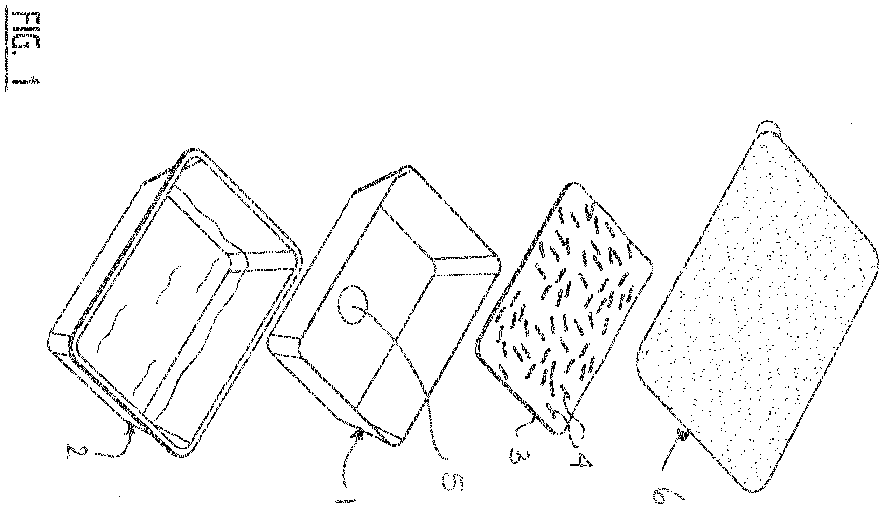

The embodiment shown in **figure 1** comprises a box 1 that forms the plant compartment and a larger box 2 that forms the water compartment. Furthermore, there is shown a mat 3 with seeds 4, which mat 3 fits in box 1. Box 1 has a filter 5 in its bottom. The membrane 6 is for sealing off the container formed by the two boxes. Box 2 is filled with water 3.

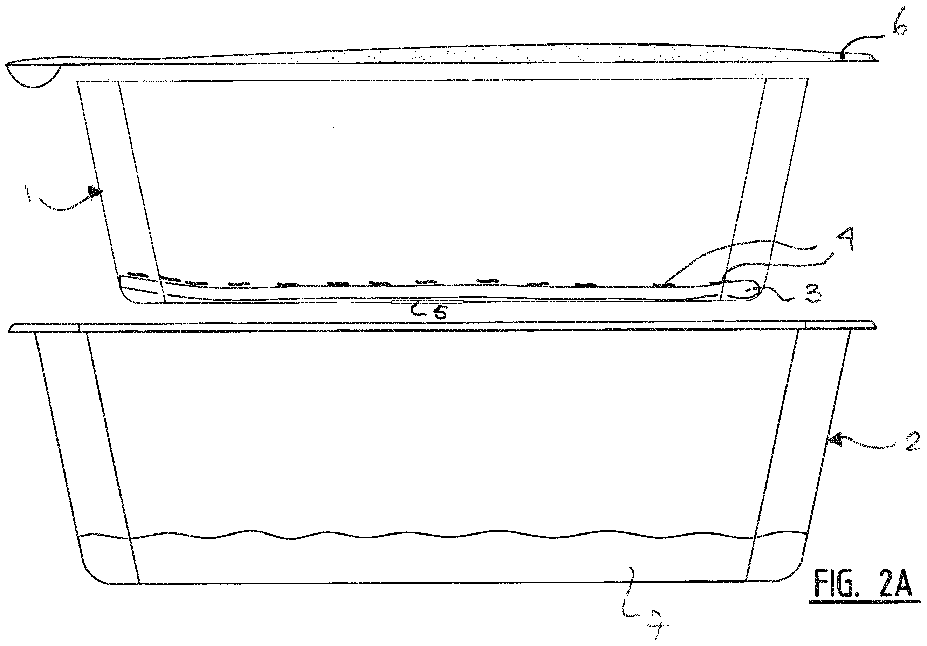

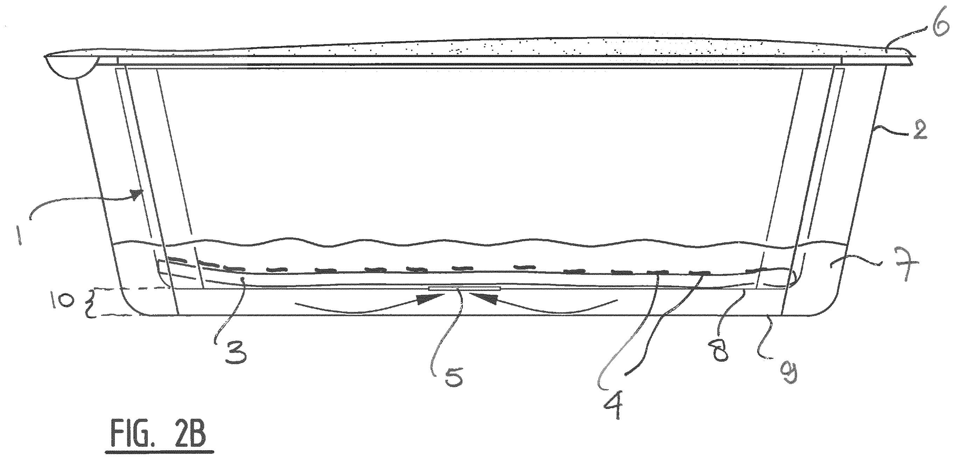

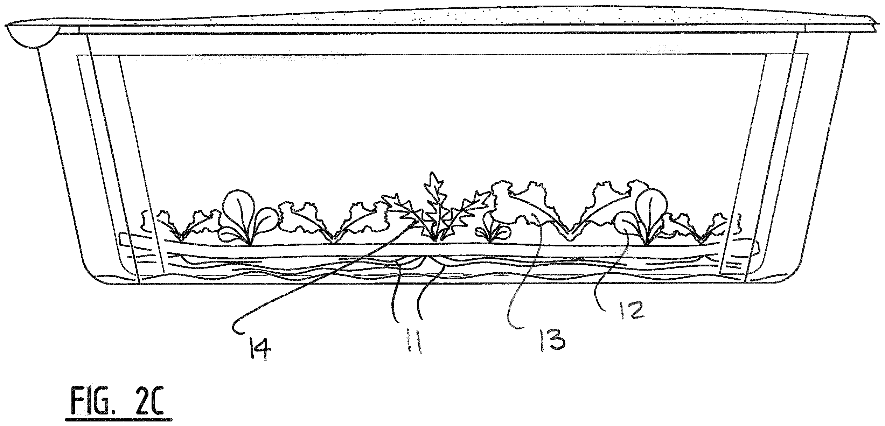

**Figure 2A** shows the container of figure 1 from the side. **Figure 2B** demonstrates that the two bottoms 8 and 9 of the boxes 1 and 2 leave a space 10 in between them. This space 10 contains the liquid medium 3 comprising water and nutrients. The bottom 8 of the inner box 1 which forms the plant compartment comprises a filter 6 that allows water 3 to enter from the space 10 into box 1 but prevents microorganisms from passing from the water compartment to the plant but still allow the growing plant to take up nutrients. In this embodiment a seed mat 4 is envisaged. The seed mat has capillary action and facilitates uptake of nutrients and water. As shown in **figure 2C**, the roots 11 are capable of growing through the seed mat 5 but do not penetrate the bottom 8 of box 1. They therefore do not come into contact with the water and nutrients contained in the space 10.

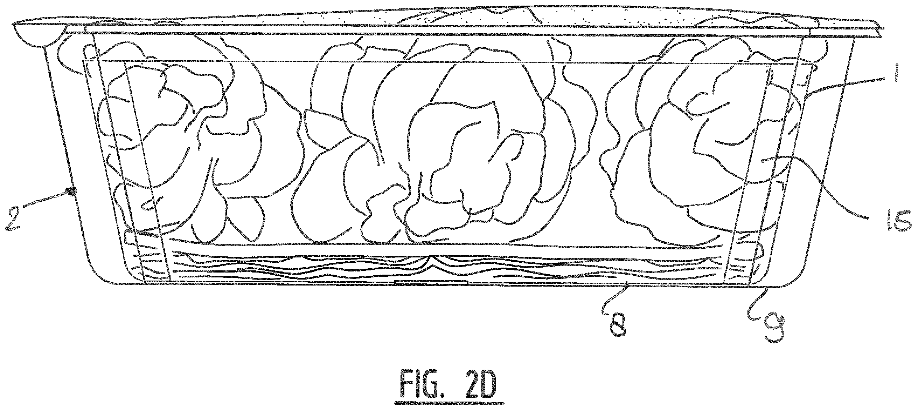

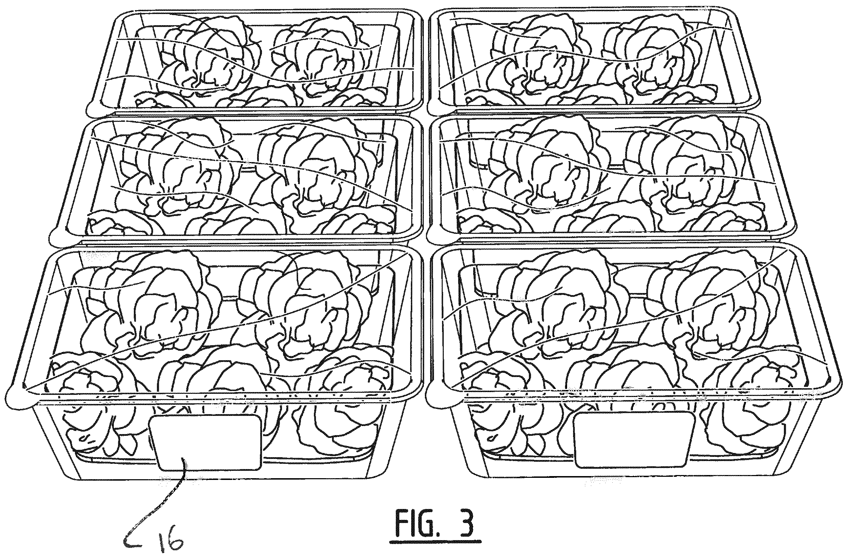

**Figure 2D** shows the almost finished products with the mature vegetable plants 12. The water 3 has been totally consumed by the plants and the space 10 between the two bottoms 8 and 9 of boxes 1 and 2 has disappeared. In **figure 3** it is shown that the boxes are provided with a label and are ready to be placed in a retail facility.

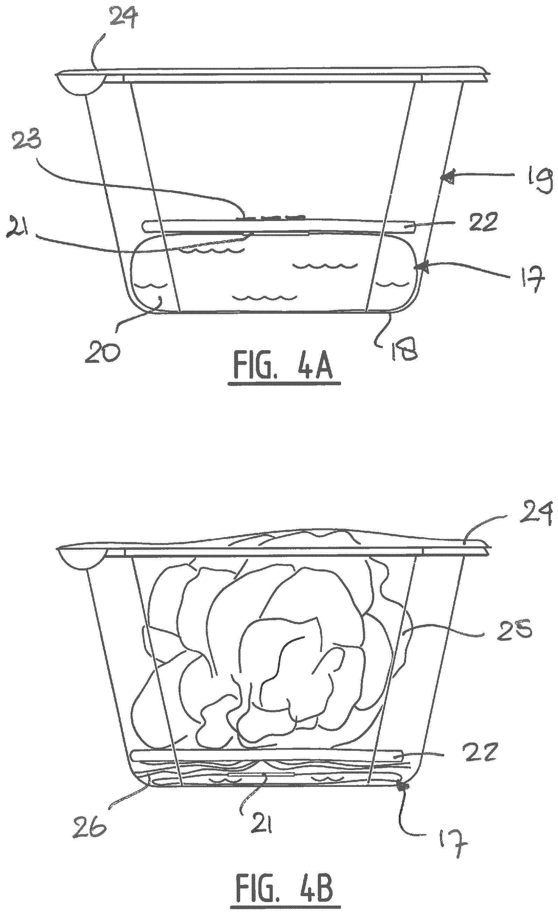

**Figure 4** shows another embodiment in which the water compartment is not the outer box but a bag 13 placed on the bottom 14 of the plant compartment 15 which is now the outer box. The bag 13 contains a liquid medium 16, i.e. water and nutrients, and is in its upper side provided with a filter 17 that only allows entrance of water and nutrients into plant compartment 15 but keeps out contaminants and pathogens that may be present in the liquid medium. A capillary mat 18 is placed on top of the bag 13. Seeds are placed on top of the mat or are integrated in the mat. The box that forms the plant compartment is sealed off with a permeable membrane 19 that allows gas exchange but is also impermeable to contaminants and pathogens.

In **figure 5** the embodiment of **figure 4** is shown in consumer-ready stage.

## Claims

1. Method for producing consumer-ready vegetables, mushrooms or herbs, comprising the steps of:
a) culturing vegetables, mushrooms or herbs in a closed container under suitable growing conditions until maturity; and
b) transferring the container with the mature vegetable, mushrooms or herb to a retail outlet,
**characterized in that** the vegetables, mushrooms or herbs are cultured in a container that comprises a plant compartment (1, 19) for containing the vegetables, mushrooms or herbs and a separate water compartment (2, 17) for containing water and nutrients,
wherein the plant compartment (1) is located inside the water compartment (2), and wherein the bottom of the plant compartment (8) comprises a filter (5) that is permeable to water and nutrients but impermeable to contaminations and pathogens, such as viruses, bacteria, fungi, protists or insects, or
wherein the water compartment has the form of a bag (17), which is provided with a filter (21) that is permeable to water and nutrients but impermeable to contaminations and pathogens, such as viruses, bacteria, fungi, protists or insects and the bag (17) is located inside the plant compartment (19).

2. Method as claimed in claim 1, wherein the plant compartment (1, 19) comprises means for transporting water and nutrients entering the plant compartment (1, 19) to the vegetables, mushrooms or herbs and wherein the means for transporting water are in particular capillary means, such as a mat (3, 22).

3. Method as claimed in claim 1 or 2, wherein the plant compartment (1) floats on water contained in the water compartment (2).

4. Method as claimed in any one of the claims 1-3, wherein the water and nutrients are comprised in the space (10) between the bottoms of the plant and water compartment (8, 9).

5. Method as claimed in claim 1, wherein the plant compartment (1) has the form of a bag, which is provided with a filter that is permeable to water and nutrients but impermeable to contaminations and pathogens, such as viruses, bacteria, fungi, protists or insects and the bag is located inside the water compartment (2) and wherein the vegetables, mushrooms or herbs in particular grow on a mat that is in contact with the filter.

6. Method as claimed in any one of the claims 1-5, wherein the container is closed off with a permeable membrane (6, 24), which is preferably permeable to oxygen (O₂),carbon dioxide (CO₂) and water vapor but preferably impermeable to contaminations and pathogens, such as viruses, bacteria, fungi, protists or insects.

7. Method as claimed in any one of the claims 1-6, wherein prior to culturing the vegetables, mushrooms or herbs, a seed, germinated seed, seedling or small plant for the vegetable or herb or mycelium for the mushrooms is placed in the plant compartment (1) and the container is closed.

8. Method as claimed in any one of the claims 1-7, wherein the vegetables are leafy vegetables, in particular lettuce, in particular leaf lettuce, head lettuce or baby leaf lettuce, endive, rucola, lamb lettuce, corn salad, chard, leaf beet, spinach, radish, sprout vegetables, in particular, cress, beet sprouts, alfalfa, broccoli sprouts, bean sprouts, fennel sprouts, cabbage sprouts, garlic sprouts, leek sprouts, pea sprouts, chickpea sprouts, or wherein the herbs are selected from chives, parsley, basil, dill weed, coriander, cilantro, mint, oregano, rosemary, thyme, marjoram, lemon balm.

9. Method as claimed in any one of the claims 1-8, wherein the seeds (4) are provided in the form of a seed mat (3) or seed band and/or wherein the container is provided with a label (16) with information regarding the vegetable, mushrooms or herb.

10. Method as claimed in any one of the claims 1-9, wherein culturing of the vegetables, mushrooms or herbs until maturity takes place in or in the vicinity of the retail outlet.

11. Set for producing consumer-ready vegetables, mushrooms or herbs, comprising a container, sowing or planting material (4) and a permeable membrane (6), wherein the container comprises a plant compartment (1) for containing the vegetables, mushrooms or herbs and a water compartment (2) for containing water and nutrients, wherein the plant compartment (1) is located inside the water compartment (2), wherein the bottom of the plant compartment (8) comprises a filter (5) that is permeable to water and nutrients but impermeable to contaminations and pathogens, such as viruses, bacteria, fungi, protists or insects.

12. Set as claimed in claim 11, wherein the plant compartment (1) is configured such that it fits inside the water compartment (2) while leaving a space (10) for the water and nutrients in between the bottoms of the first and second compartment (8, 9).

13. Set for producing consumer-ready vegetables, mushrooms or herbs, comprising a container, sowing or planting material (4) and a permeable membrane (6), wherein the container comprises a plant compartment (1) for containing the vegetables, mushrooms or herbs and a water compartment (2) for containing water and nutrients, wherein the water compartment (2) has the form of a bag (17) that fits inside the plant compartment (1, 19) while leaving sufficient room in the first compartment (1) for the vegetables, mushrooms or herbs to grow to their ready-to-harvest stage.

## Patentansprüche

1. Verfahren zum Produzieren von Gemüse, Pilzen oder Kräutern, die verbrauchsfertig sind, umfassend die Schritte:
a) Kultivieren von Gemüse, Pilzen oder Kräutern in einem geschlossenen Behälter unter geeigneten Wachstumsbedingungen bis zu einer Reife; und
b) Übergeben des Behälters mit dem/den reifen Gemüse, Pilzen oder Kräutern an eine Verkaufsstelle,
**dadurch gekennzeichnet, dass** das Gemüse, die Pilze oder die Kräuter in einem Behälter kultiviert werden, der eine Pflanzenkammer (1, 19) zum Aufnehmen des Gemüses, der Pilze oder der Kräuter und eine separate Wasserkammer (2, 17) zum Aufnehmen von Wasser und Nährstoffen umfasst,
wobei sich die Pflanzenkammer (1) im Inneren der Wasserkammer (2) befindet und wobei der Boden der Pflanzenkammer (8) einen Filter (5) aufweist, der für Wasser und Nährstoffe durchlässig, jedoch für Verunreinigungen und Krankheitserreger, wie Viren, Bakterien, Fungi, Protisten oder Insekten, undurchlässig ist, oder
wobei die Wasserkammer die Form eines Beutels (17) aufweist, der mit einem Filter (21) versehen ist, der für Wasser und Nährstoffe durchlässig, jedoch für Verunreinigungen und Krankheitserreger, wie Viren, Bakterien, Fungi, Protisten oder Insekten, undurchlässig ist, und sich der Beutel (17) im Inneren der Pflanzenkammer (19) befindet.

2. Verfahren nach Anspruch 1, wobei die Pflanzenkammer (1, 19) Mittel zum Transportieren von Wasser und Nährstoffen, die in die Pflanzenkammer (1, 19) eintreten, zu dem Gemüse, den Pilzen oder den Kräutern umfasst und wobei die Mittel zum Transportieren von Wasser insbesondere Kapillarmittel, wie eine Matte (3, 22), sind.

3. Verfahren nach Anspruch 1 oder 2, wobei die Pflanzenkammer (1) auf Wasser, das in der Wasserkammer (2) aufgenommen ist, schwimmt.

4. Verfahren nach einem der Ansprüche 1 bis 3, wobei das Wasser und die Nährstoffe in dem Raum (10) zwischen den Böden der Pflanzen- und der Wasserkammer (8, 9) enthalten sind.

5. Verfahren nach Anspruch 1, wobei die Pflanzenkammer (1) die Form eines Beutels aufweist, der mit einem Filter versehen ist, der für Wasser und Nährstoffe durchlässig, jedoch für Verunreinigungen und Krankheitserreger, wie Viren, Bakterien, Fungi, Protisten oder Insekten, undurchlässig ist, und sich der Beutel im Inneren der Wasserkammer (2) befindet und wobei das Gemüse, die Pilze oder die Kräuter insbesondere auf einer Matte wachsen, die mit dem Filter in Kontakt ist.

6. Verfahren nach einem der Ansprüche 1 bis 5, wobei der Behälter mit einer durchlässigen Membran (6, 24) verschlossen ist, die vorzugsweise für Sauerstoff (O₂), Kohlendioxid (CO₂) und Wasserdampf durchlässig, jedoch vorzugsweise für Verunreinigungen und Krankheitserreger, wie Viren, Bakterien, Fungi, Protisten oder Insekten, undurchlässig ist.

7. Verfahren nach einem der Ansprüche 1 bis 6, wobei vor dem Kultivieren des Gemüses, der Pilze oder der Kräuter ein Samen, ein gekeimter Samen, ein Sämling oder eine kleine Pflanze für das Gemüse oder die Kräuter oder ein Myzel für die Pilze in die Pflanzenkammer (1) gelegt wird und der Behälter geschlossen wird.

8. Verfahren nach einem der Ansprüche 1 bis 7, wobei es sich bei dem Gemüse um Blattgemüse handelt, insbesondere Salat, insbesondere Blattsalat, Kopfsalat oder Babyblattsalat, Endivie, Rucola, Feldsalat, Maissalat, Mangold, Blattrübe, Spinat, Rettich, Sprossengemüse, insbesondere Kresse, Rübensprossen, Luzerne, Brokkolisprossen, Bohnensprossen, Fenchelsprossen, Kohlsprossen, Knoblauchsprossen, Lauchsprossen, Erbsensprossen, Kichererbsensprossen, oder wobei die Kräuter aus Schnittlauch, Petersilie, Basilikum, Dill, Echter Koriander, Koriander, Minze, Oregano, Rosmarin, Thymian, Majoran, Zitronenmelisse ausgewählt sind.

9. Verfahren nach einem der Ansprüche 1 bis 8, wobei die Samen (4) in der Form einer Samenmatte (3) oder eines Samenbands bereitgestellt werden und/oder wobei der Behälter mit einem Etikett (16) mit Informationen bezüglich des Gemüses, der Pilze oder der Kräuter versehen ist.

10. Verfahren nach einem der Ansprüche 1 bis 9, wobei das Kultivieren des Gemüses, der Pilze oder der Kräuter bis zu der Reife in oder in der Nähe der Verkaufsstelle erfolgt.

11. Satz zum Produzieren von Gemüse, Pilzen oder Kräutern, die verbrauchsfertig sind, umfassend einen Behälter, Saat- oder Pflanzmaterial (4) und eine durchlässige Membran (6), wobei der Behälter eine Pflanzenkammer (1) zum Aufnehmen des Gemüses, der Pilze oder der Kräuter und eine Wasserkammer (2) zur Aufnehmen von Wasser und Nährstoffen umfasst, wobei sich die Pflanzenkammer (1) im Inneren der Wasserkammer (2) befindet, wobei der Boden der Pflanzenkammer (8) einen Filter (5) umfasst, der für Wasser und Nährstoffe durchlässig, jedoch für Verunreinigungen und Krankheitserreger, wie Viren, Bakterien, Fungi, Protisten oder Insekten, undurchlässig ist.

12. Satz nach Anspruch 11, wobei die Pflanzenkammer (1) derart konfiguriert ist, dass sie ins Innere der Wasserkammer (2) passt, während zwischen den Böden der ersten und der zweiten Kammer (8, 9) ein Raum (10) für Wasser und Nährstoffe gelassen wird.

13. Satz zum Produzieren von Gemüse, Pilzen oder Kräutern, die verbrauchsfertig sind, umfassend einen Behälter, Saat- oder Pflanzmaterial (4) und eine durchlässige Membran (6), wobei der Behälter eine Pflanzenkammer (1) zum Aufnehmen des Gemüses, der Pilze oder der Kräuter und eine Wasserkammer (2) zum Aufnehmen von Wasser und Nährstoffen umfasst, wobei die Wasserkammer (2) die Form eines Beutels (17) aufweist, der ins Innere der Pflanzenkammer (1, 19) passt, während in der ersten Kammer (1) ausreichend Platz dafür gelassen wird, dass das Gemüse, die Pilze oder die Kräuter bis zu ihrem erntebereiten Stadium wachsen können.

## Revendications

1. Procédé permettant de produire des légumes, champignons ou herbes, prêts à la consommation, comprenant les étapes consistant à :
a) cultiver des légumes, champignons ou herbes dans un récipient fermé dans des conditions de croissance appropriées jusqu'à maturité ; et
b) transférer le récipient avec les légumes, champignons ou herbes, mûrs, à un point de vente,
**caractérisé en ce que** les légumes, champignons ou herbes sont cultivés dans un récipient qui comprend un compartiment à plantes (1, 19) destiné à contenir les légumes, champignons ou herbes et un compartiment à eau (2, 17) distinct destiné à contenir de l'eau et des nutriments,
dans lequel le compartiment à plantes (1) est localisé à l'intérieur du compartiment à eau (2), et dans lequel le fond du compartiment à plantes (8) comprend un filtre (5) qui est perméable à l'eau et aux nutriments, mais imperméable à des contaminations et à des agents pathogènes, tels que virus, bactéries, moisissures, protistes ou insectes, ou
dans lequel le compartiment à eau a la forme d'un sac (17), qui est pourvu d'un filtre (21) qui est perméable à l'eau et aux nutriments, mais imperméable à des contaminations et à des agents pathogènes, tels que virus, bactéries, moisissures, protistes ou insectes et le sac (17) est localisé à l'intérieur du compartiment à plantes (19).

2. Procédé selon la revendication 1, dans lequel le compartiment à plantes (1, 19) comprend des moyens permettant de transporter l'eau et les nutriments entrant dans le compartiment à plantes (1, 19) aux légumes, champignons ou herbes et dans lequel les moyens permettant de transporter l'eau sont en particulier des moyens capillaires, tels qu'un tapis (3, 22).

3. Procédé selon la revendication 1 ou 2, dans lequel le compartiment à plantes (1) flotte sur l'eau contenue dans le compartiment à eau (2).

4. Procédé selon l'une quelconque des revendications 1 à 3, dans lequel l'eau et les nutriments sont compris dans l'espace (10) entre le bas de la plante et le compartiment à eau (8, 9).

5. Procédé selon la revendication 1, dans lequel le compartiment à plantes (1) a la forme d'un sac, qui est pourvu d'un filtre qui est perméable à l'eau et aux nutriments, mais imperméable à des contaminations et à des agents pathogènes, tels que virus, bactéries, moisissures, protistes ou insectes et le sac est localisé à l'intérieur du compartiment à eau (2) et dans lequel les légumes, champignons ou herbes croissent en particulier sur un tapis qui est en contact avec le filtre.

6. Procédé selon l'une quelconque des revendications 1 à 5, dans lequel le récipient est fermé avec une membrane perméable (6, 24), qui est de préférence perméable à l'oxygène (O₂), au dioxyde de carbone (CO₂) et à la vapeur d'eau, mais de préférence imperméable à des contaminations et à des agents pathogènes, tels que virus, bactéries, moisissures, protistes ou insectes.

7. Procédé selon l'une quelconque des revendications 1 à 6, dans lequel avant la culture des légumes, champignons ou herbes, une semence, une semence germée, une plantule ou une petite plante pour le légume ou l'herbe ou un mycélium pour les champignons est placé dans le compartiment à plantes (1) et le récipient est fermé.

8. Procédé selon l'une quelconque des revendications 1 à 7, dans lequel les légumes sont des légumes à feuilles, en particulier laitue, en particulier laitue frisée, laitue pommée ou jeune laitue, endive, roquette, mâche, salade de blé, bette, betterave, épinard, radis, des légumes germés, en particulier cresson, germes de betterave, luzerne, germes de brocoli, germes de haricots, germes de fenouil, germes de chou, germes d'ail, germes de poireau, germes de pois, germes de pois chiches, ou dans lequel les herbes sont choisies parmi ciboulette, persil, basilic, aneth, coriandre, cilantro, menthe, origan, romarin, thym, marjolaine, mélisse.

9. Procédé selon l'une quelconque des revendications 1 à 8, dans lequel les semences (4) sont fournies sous la forme d'un tapis de semences (3) ou d'une bande de semences et/ou dans lequel le récipient est pourvu d'une étiquette (16) avec des informations concernant le légume, les champignons ou l'herbe.

10. Procédé selon l'une quelconque des revendications 1 à 9, dans lequel la culture des légumes, champignons ou herbes jusqu'à maturité se déroule dans ou au voisinage du point de vente.

11. Ensemble permettant de produire des légumes, champignons ou herbes prêts à la consommation, comprenant un récipient, du matériel de semis ou de plantation (4) et une membrane perméable (6), dans lequel le récipient comprend un compartiment à plantes (1) destiné à contenir les légumes, champignons ou herbes et un compartiment à eau (2) destiné à contenir de l'eau et des nutriments, dans lequel le compartiment à plantes (1) est localisé à l'intérieur du compartiment à eau (2), dans lequel le fond du compartiment à plantes (8) comprend un filtre (5) qui est perméable à l'eau et aux nutriments, mais imperméable à des contaminations et à des agents pathogènes, tels que virus, bactéries, moisissures, protistes ou insectes.

12. Ensemble selon la revendication 11, dans lequel le compartiment à plantes (1) est configuré de telle sorte qu'il s'intègre à l'intérieur du compartiment à eau (2) tout en laissant un espace (10) pour l'eau et les nutriments entre les fonds des premier et second compartiments (8, 9).

13. Ensemble permettant de produire des légumes, champignons ou herbes, prêts à la consommation, comprenant un récipient, du matériel de semis ou de plantation (4) et une membrane perméable (6), dans lequel le récipient comprend un compartiment à plantes (1) destiné à contenir les légumes, champignons ou herbes et un compartiment à eau (2) destiné à contenir de l'eau et des nutriments, dans lequel le compartiment à eau (2) a la forme d'un sac (17) qui s'intègre à l'intérieur du compartiment à plantes (1, 19) tout en laissant suffisamment de place dans le premier compartiment (1) pour permettre aux légumes, champignons ou herbes de croître jusqu'à leur stade prêt pour la récolte.
